Europäisches Patentamt

**European Patent Office**

Office européen des brevets

(19)

(11) Numéro de publication: **0 076 820**
**B1**

(12)

# FASCICULE DE BREVET EUROPEEN

(45) Date de publication du fascicule du brevet:
**12.12.84**

(21) Numéro de dépôt: **82901130.3**

(22) Date de dépôt: **20.04.82**

(86) Numéro de dépôt international:
**PCT/FR 82/00072**

(87) Numéro de publication internationale:
**WO 82/03681 (28.10.82 Gazette 82/26)**

(51) Int. Cl.³: **F 27 B 9/06,** F 26 B 23/10,
A 21 B 1/10

(54) **FOUR TUNNEL A CHAUFFAGE PAR CIRCULATION D'HUILE DESTINE A LA CUISSON DE PRODUITS ALIMENTAIRES.**

(30) Priorité: **22.04.81 FR 8108155**

(43) Date de publication de la demande:
**20.04.83 Bulletin 83/16**

(45) Mention de la délivrance du brevet:
**12.12.84 Bulletin 84/50**

(84) Etats contractants désignés:
**AT CH DE GB LI LU NL SE**

(56) Documents cités:
**AT - A - 297 184**
**CH - A - 200 988**
**CH - A - 261 636**
**DE - A - 1 432 923**
**DE - A - 2 908 572**
**DE - B - 1 532 919**
**FR - A - 435 931**

(73) Titulaire: **PAVAILLER, Louis, 80, avenue Victor Hugo,
F-26000 Valence (FR)**

(72) Inventeur: **PAVAILLER, Louis, 80, avenue Victor Hugo,
F-26000 Valence (FR)**

## Description

L'invention concerne un four tunnel à chauffage par circulation d'huile, destiné à la cuisson de produits alimentaires, comprenant, un tunnel en tôle, des radiateurs en tubes placés en voûte et en sole, des canalisations de circulation d'huile et une régulation automatique de température pour tous ou pour une partie des radiateurs.

Les fours tunnels chauffés par circulation d'huile, n'existent dans le monde qu'en peu d'exemplaires, ces fours n'ont pas de grandes dimensions et leur régulation de température est rudimentaire. Ce système de four ne s'est pas développé car il présente des inconvénients qui sont: le risque de fuite d'huile, (risque particulièrement grave) et l'impossibilité d'avoir automatiquement une régulation de température et une tempérture uniforme de tous les radiateurs.

Indépendamment du groupe de chauffage et de circulation, un four chauffé par circulation d'huile est composé, du tunnel en tôle constituant le corps du four, des radiateurs placés en voûte et en sole, des canalisations de distribution d'huile, allant de la chaudière aux radiateurs et des canalisations de retour d'huile à la chaudière. Tous ces éléments sont à des températures différentes, notamment aux démarrages et aux changements de régimes. Les écarts de température peuvent être suffisamment importants, pour que les différences de dilatation entrainent des efforts capables de créer des fissures ou des ruptures, dans les radiateurs ou dans les canalisations d'huile. Dans ces fours, la régulation automatique de la chaleur émise par chaque radiateur, ou par un groupe de radiateurs, est pratiquement impossible à réaliser avec précision, car une diminution du débit d'huile dans un radiateur entraine une irrégularité de température dans les différentes zones du radiateur et une modification du fonctionnement des radiateurs voisins.

La présente invention a pour but de remédier à ces inconvénients, en créant un four avec une nouvelle structure dont les avantages permettraient de concurrencer avantageusement les fours à circulation d'air ou les fours à chauffage direct.

Dans cette nouvelle structure, les radiateurs placés en voûte et en sole, sont composés de tubes fer de petit diamètre, disposés parallèlement à l'axe du four, sur un même plan, horizontal. Chaque radiateur comporte 3 collecteurs, qui sont perpendiculaires aux tubes, 2 collecteurs ètant près l'un de l'autre, à l'une des extrémités des tubes, et un autre collecteur, parallèle aux 2 autres, placé à l'autre extrémité des tubes. L'huile arrive dans un des 2 collecteurs qui sont proches l'un de l'autre, rentre dans les tubes qu'on pourrait numéroter 1, 3, 5, 7, etc. puis arrive dans le collecteur opposé, rentre dans les tubes qu'on pourrait numéroter 2, 4, 6, 8, etc. et arrive dans le 3e collecteur. Ce troisième collecteur est raccordé aux canalisations de retour d'huile à la chaudière. Cette disposition est telle que l'émission de chaleur est uniforme sur toute la surface du radiateur. En effet, si l'on prend, à titre d'exemple, un radiateur recevant de l'huile à 300° et la refroidissant à 200°, on constate à une extrémité du radiateur, que les tubes 1, 3, 5, 7, etc. sont à 300° et qu'à cette même extrémité, les tubes 2, 4, 6, 8, etc. sont à 200°. Etant donné la proximité des tubes, l'émission de chaleur, à cette partie du radiateur (température moyenne entre les 2 tubes, 250°) est la même qu'à l'autre extrémité du radiateur où la température de tous les tubes est de 250°. Pour diminuer la puissance d'un radiateur, il suffit de diminuer le débit d'huile, afin d'augmenter l'écart de température entre l'arrivée et la sortie de l'huile, l'uniformité d'émission étant toujours conservée.

Les radiateurs sont placés dans le tunnel en tôle dont la température est par moment, différente de celle des radiateurs. Pour éviter toute tension entre le tunnel et les radiateurs, ces derniers reposent, par leurs angles, sur 4 supports, solidaires du tunnel. Sur un premier support, le radiateur est immobilisé par boulonnage. Sur le deuxième support, placé sur la face opposée du four, le radiateur est simplement guidé et peut se déplacer dans le sens perpendiculaire à l'axe du four. Sur les 2 autres supports les radiateur est simplement posé et peut se déplacer dans les 2 sens. Pour éviter une tension entre le tunnel et les 2 tuyauteries, entrée et sortie du radiateur, ces dernières traversent la tôle du tunnel, aux endroits où le radiateur ne peut se déplacer longitudinalement par rapport au tunnel.

Les radiateurs sont alimentés en huile, par une canalisation principale, qui part de la chaudière placée au-dessus du tunnel, descend sous le tunnel, le suit près d'un bord et sur toute sa longueur. Cette canalisation est placée dans des supports, fixés au tunnel, dans lesquels elle peut coulisser sans effort, lorsqu'elle s'allonge ou se rétracte par suite des variations de sa température. Sur cette canalisation sont soudées autant de dérivations qu'il y a de radiateurs à alimenter. Ces dérivations passent sous le tunnel, horizontalement, et montent sur la face opposée du tunnel, pour alimenter chaque radiateur. Les dérivations alimentant les radiateurs, étant de petit diamètre et de grande longueur, peuvent, lorsque la canalisation principale se déplace, se déformer élastiquement, sans fatiguer, ni les tubes, ni les soudures. Dans le cas de fours étroits et de grande longueur les dérivations alimentant les radiateurs, notamment ceux éloignés de la chaudière, peuvent être allongées artificiellement, pour augmenter leur élasticité, et former de véritables lyres de dilatation. La canalisation de retour d'huile à la chaudière est analogue à la canalisation d'alimentation des radiateurs, mais elle est placée au-dessus du tunnel, sur toute sa longueur et également près d'un bord. Les raccordements de retours des radiateurs, sont réalises de la même façon que les raccordements d'alimentation, ils montent sur la face du tunnel op-

posé au collecteur, et traversent le dessus du tunnel, avant d'être soudés à ce collecteur. L'évacuation de l'air du circuit ainsi réalisé s'effectue automatiquement, dans le sens de la circulation d'huile.

La régulation de température dans les différentes parties du tunnel est réalisée en plaçant sur les branchements de retour des radiateurs des sondes de prise de température agissant sur des vannes motorisées, par l'intermédiaire de thermostats réglables. Cette régulation est beaucoup plus précise que celle qui consiste à placer des sondes à l'intérieur du four, de plus, la régulation d'un radiateur est sans effet sur celle des radiateurs voisins. Les appareils de régulation, placés au-dessus du tunnel, sont facilement accessibles, ils sont composés d'éléments standards, construits en grande série et d'un prix modéré (les thermostats peuvent être regroupés sur le tableau de commande du four).

Les avantages obtenus grâce à cette invention sont:

—   la suppression du risque de fuite par la suppression des tensions importantes, dues aux dilatations, dans les différents éléments du four, tunnel, radiateurs, tuyauteries;

—   une sécurité totale donnée par la possibilité d'une épreuve à très haute pression de tous les éléments du four;

··   une émission de chaleur uniforme sur toute la surface de chacun des radiateurs;

—   une régulation automatique des températures sur tous ou sur une partie des radiateurs.

Diverses autres caractéristiques de l'invention ressortent de la description faite ci-dessous, en se référant aux dessins annexés, qui montrent à titre d'exemples non limitatifs, des formes de réalisation de l'invention.

La fig. 1 est une vue en élévation, montrant schématiquement, le four longitudinalement.

La fig. 2 est une vue partielle, réalisée comme la fig. 1, montrant une partie du four, dans le cas, où faisant partie d'une installation importante, il est alimenté par 2 tuyauteries provenant d'une chaufferie centrale.

La fig. 3 est une vue en perspective, montrant schématiquement un radiateur avec son dispositif de régulation.

La fig. 4 est une vue en perspective montrant schématiquement, les tuyauteries alimentant à titre d'exemple, 2 radiateurs placés en voûte et 2 radiateurs placés en sole du four.

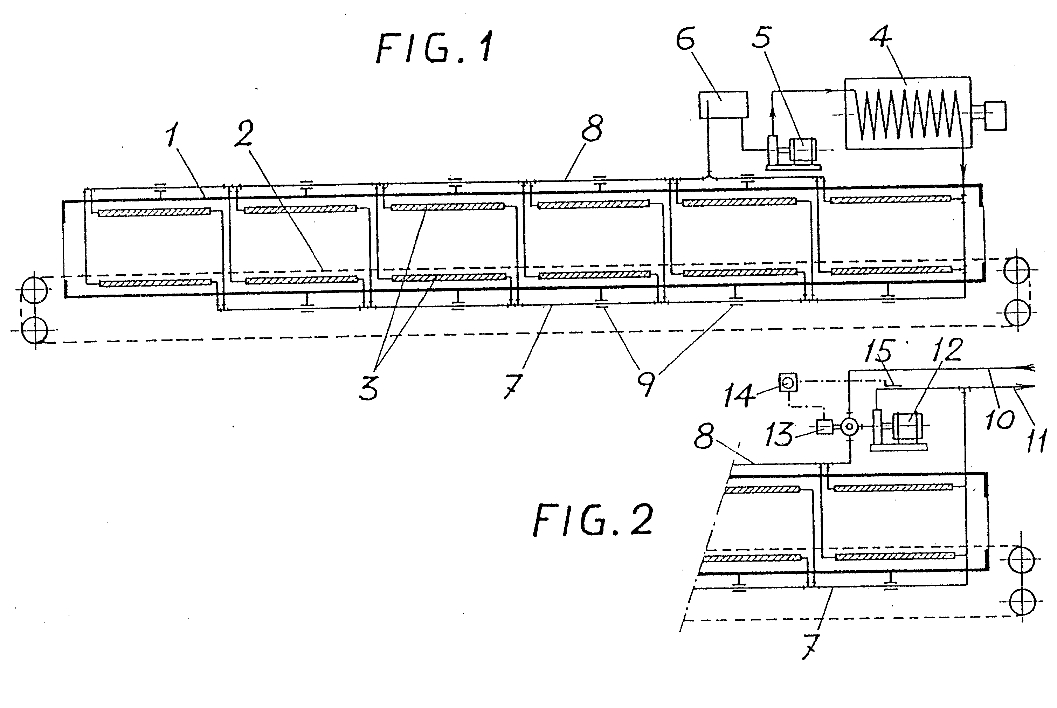

La fig. 1 montre un four dont le corps est constitué par le tunnel en tôle 1, dans lequel circule un tapis métallique 2, sur lequel sont disposés les produits à cuire. Six radiateurs 3, sont disposés en voûte et six autres radiateurs 3, sont placés en sole, sous le tapis métallique 2. Au-dessus du tunnel sont installés, la chaudière 4, la pompe de circulation 5, et le vase d'expansion 6. De la chaudière part la tuyauterie de distribution d'huile 7, placée au-dessous du tunnel, sur laquelle sont soudés les branchements, alimentant les 12 radiateurs. Une tuyauterie 8, placée au-dessus du four, ramène l'huile à la chaudière. Ces 2 tuyauteries sont supportées par des colliers 9, fixés au tunnel dans lesquels, elles peuvent coulisser librement, lorsqu'elles s'allongent ou se rétractent sous l'effet des variations de température.

Dans la fig. 2, les tuyauteries 10 et 11, relient le four à une chaufferie centrale, et la pompe 12 assure la circulation de l'huile dans tout le circuit. Une vanne 3 voies 13, est placée sur l'aspiration de la pompe 12, qui aspire un mélange d'huile provenant des radiateurs et de la chaudière. La proportion des 2 provenances dans le mélange est déterminée par un thermostat 14, commandant la vanne 3 voies 13, en recevant les indications d'une sonde 15, placée au contact du tuyau de refoulement de la pompe. Ce dispositif permet à l'utilisateur du four de choisir la température de l'huile alimentant les radiateurs et le maintient automatique de cette température. Ce dispositif permet l'alimentation par une seule chaudière de plusieurs fours fonctionnant à des températures différentes.

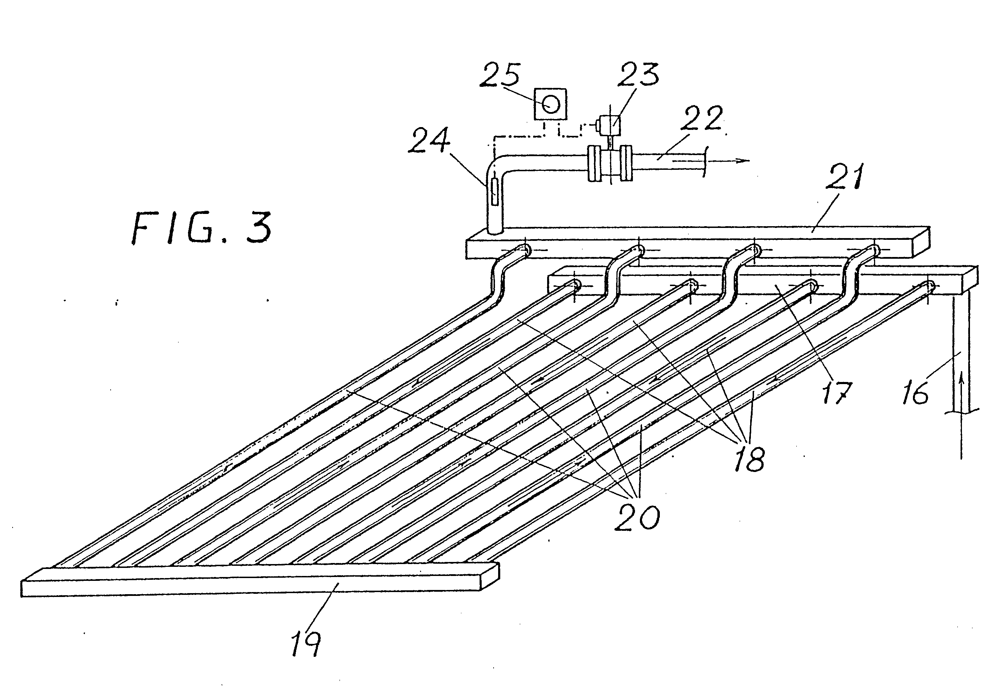

La fig. 3 montre un radiateur, qui est alimenté par la tuyauterie 16, raccordée au collecteur 17, sur lequel sont soudés, à une de leurs extrémités les tubes 18. A leur autre extrémité, ces tubes sont soudés au collecteur 19, sur lequel sont soudés également les tubes 20, dont l'autre extrémité est soudée au collecteur 21. Une tuyauterie 22, est soudée au collecteur 21 et ramène l'huile à la canalisation 8, de retour à la chaudière. Cette disposition des tubes 18 et 20, permet d'avoir sur toute la surface du radiateur, la même température moyenne, et d'avoir ainsi une émission de chaleur uniforme. Sur la tuyauterie de retour 22, sont placées, une vanne motorisée 23 et une sonde de prise de température 24, qui commande la vanne motorisée 23, par l'intermédiaire du thermostat 25, qui est réglé à la température désirée. Cette régulation permet d'ajuster le débit d'huile, aux besoins de chaleur et de maintenir automatiquement la température du radiateur à une valeur constante.

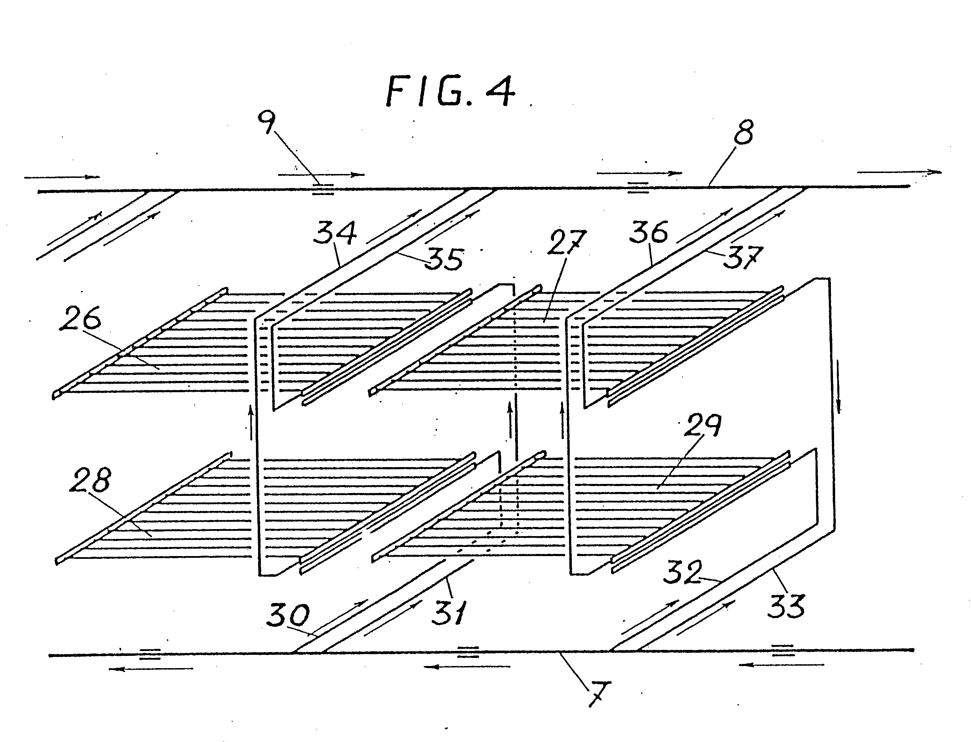

Sur la fig. 4, sont tracés, à titre d'exemple, les raccordements de 4 radiateurs 26, 27, 28 et 29, les radiateurs 26 et 27 étant placés en voûte et les radiateurs 28 et 29 étant placés en sole du four. Ces radiateurs alimentés par les branchements 30, 31, 32 et 33, soudés sur la canalisation 8. Des branchements 35, 36, 37, 38, sont soudés à la canalisation 9, de retour à la chaudière. Les branchements des radiateurs, alimentation et retour, ont tous une partie horizontale, ayant comme longueur, une fois au moins, la largeur du four. Sour les branchements 34, 35, 36 et 37, sont disposés les appareils de régulation 23, 24 et 25 tracés sur la fig. 3.

## Revendications

1. Four-tunnel comprenant: un tunnel, un groupe de chauffage et de circulation d'huile, des radiateurs placés en sole et en voûte du tunnel, des canalisations d'alimentation des radiateurs et de retour du fluide à la chaudière, et un système de régulation de la température dans toutes, ou dans certaines zones du tunnel, caractérisé en ce qu'il est composé de:

— un tunnel (1) comportant des supports (9) dans lesquels les canalisations d'alimentation (7) et de retour (8) sont montées avec possibilité de coulissement;
— des radiateurs tubulaires (3) placés dans le tunnel et maintenus chacun par un point de fixation et trois points de support autorisant un déplacement relatif, dans le sens longitudinal et dans le sens transversal du tunnel;
— des dérivations (30 à 37) établies, entre les radiateurs et les canalisations principales, transversalement à la longueur du four et formant des éléments déformables de compensation de dilatation;
— de radiateurs dont chacun est constitué de deux séries de tubes de circulation (18) et (20) formant une nappe horizontale, la première série de tubes (18) étant disposée entre un collecteur d'alimentation (17) et un collecteur indépendant opposé (19), la deuxième série de tubes (20) étant disposée entre le collecteur opposé (19) et un collecteur de retour (21), les collecteurs d'alimentation (17) et de retour (21) étant disposés à une même extrémité de ladite nappe;
— des moyens de régulation (23—24—25) sensibles à la température de sortie de certains ou de tous les radiateurs et contrôlant le débit du fluide dans lesdits radiateurs.

2. Four-tunnel selon la revendication 1, caractérisé en ce que les colliers (9) supportant la canalisation d'alimentation (7) sont disposés à la partie basse de l'une des deux faces latérales du tunnel, alors que les colliers (9) supportant la canalisation de retour (8) sont placés à la partie haute de la face latérale opposée.

3. Four-tunnel selon la revendication 1, caractérisé en ce que le tunnel (1) comprend des radiateurs tubulaires (3) maintenus chacun par leurs quatre angles au moyen d'un premier support sur lequel l'angle correspondant est immobilisé, d'un deuxième support placé sur la face opposée du tunnel, autorisant un déplacement transversal du second angle et de deux autres supports sur lesquels sont posés les deux autres angles possibilité de déplacement.

4. Four-tunnel selon la revendication 3, caractérisé en ce que les dérivations d'alimentation et de retour (30 à 37) des radiateurs (3) sont disposées dans le plan vertical des premiers et deuxièmes support de chaque radiateur, et ont une longueur horizontale au moins égale à la largeur du tunnel.

5. Four-tunnel, selon la revendication 1, caractérisé en ce que les appareils de régulation comprennent une vanne motorisée (23) commandée par une sonde de prise de température (24) par l'intermédiaire d'un thermostat, la vanne et la sonde étant placées sur les tuyauteries de retour (22) des radiateurs.

**Patentansprüche**

1. Tunnelofen bestehend aus: einem Tunnel, einer Beheizungs- und Ölumlaufeinheit, am Boden und in der Wölbung des Tunnels untergebrachten Heizkörpern, Zuleitungen zu den Heizkörpern und Rückleitungen der Flüssigkeit zum Heizkessel, und einer Temperatureinstellvorrichtung für alle oder für bestimmte Bereiche des Tunnels; gekennzeichnet durch seine Bestandteile:

— ein Tunnel (1) mit Trägern (9) ausgerüstet, in denen die Zuleitungen (7) und Rückleitungen (8) verschiebbar angebracht sind;
— Röhrenheizkörper (3) im Tunnel angebracht und jeder einzelne getragen von einer Befestigungsstelle und drei Auflagestellen, wodurch ein beschränktes Verschieben in Längs- und Querrichtung des Tunnels ermöglicht wird;
— Ableitungen (30 bis 37) zwischen den Heizkörpern und den Hauptleitungen als verformbare Bestandteile zum Ausgleich der Ausdehnung quer über die Ofenlänge eingebaut;
— Heizkörper, von denen jeder einzelne aus zwei Umlaufröhrenreihen (18) und (20), die eine waagerechte Fläche bilden, besteht. Die erste Röhrenreihe (18) ist zwischen einem Zuflußsammelrohr (17) und einem gegenüberliegenden unabhängigen Sammelrohr (19) angebracht, die zweite Röhrenseite (20) zwischen dem gegenüberliegenden Sammelrohr (19) und einem Rücklaufsammelrohr (21). Das Zuflußsammelrohr (17) und das Rücklaufsammelrohr (21) befinden sich am selben Ende der obengenannten Fläche;
— Einstellvorrichtungen (23—24—25), die auf die Auslauftemperatur einzelner oder aller Heizkörper ansprechen und die Flüssigkeitsdurchlaufmenge in den obengenannten Heizkörpern überwacht.

2. Tunnelofen gemäß Patentanspruch 1, dadurch gekennzeichnet, daß die Befestigungsschellen (9) der Zuleitung (7) am unteren Teil der einen der beiden Seitenflächen des Tunnels angebracht sind, während die Befestigungsschellen (9) der Rückleitung (8) am oberen Teil der gegenüberliegenden Seitenfläche angebracht sind.

3. Tunnelofen gemäß Patentanspruch 1, dadurch gekennzeichnet, daß sich im Tunnel (1) Röhrenheizkörper (3) befinden, von denen jeder auf seinen vier Ecken ruht und zwar auf einem ersten Träger, an dem die entsprechende Ecke befestigt ist, auf einem zweiten, an der gegenüberliegenden Seite des Tunnels angebrachten Träger, der eine Querverschiebung der zweiten Ecke ermöglicht und auf zwei weiteren Trägern, auf denen die zwei übrigen Ecken verschiebbar aufliegen.

4. Tunnelofen gemäß Patentanspruch 3, dadurch gekennzeichnet, daß die Ableitungen der Zuleitung und der Rückleitung (30 bis 37) der Heizkörper (3) im senkrechten Teil der ersten und zweiten Träger jedes Heizkörpers untergebracht sind, und daß sie eine mindestens der Breite des Tunnels entsprechende, waagerechte Länge aufweisen.

5. Tunnelofen gemäß Patentanspruch 1, dadurch gekennzeichnet, daß die Einstellvorrichtungen ein motorgetriebenes Ventil (23), das durch einen Temperaturfühler (24) mittels eines Thermostats gesteuert wird. Das Ventil und der Temperaturfühler sind auf den Rückleitungsrohren (22) der Heizkörper untergebracht.

**Claims**

1. Tunnel-oven including a tunnel, a heating and oil circulation set, radiators places on the base and top of the vault of the tunnel, pipes for supply of radiators and return of the fluid to the boiler, and a system for adjusting temperature in all or in certain zones of the tunnel, characerized by the fact that it is composed of:

— a tunnel (1) including supports (9) in which the supply (7) and return (8) pipes are assembled with sliding possibility;
— tubular radiators (3) placed in the tunnel, each one maintained by a fixation point and three support points enabling relative movement lengthwise and crosswise;
— bypasses (30 to 37) established, between radiators and main pipes, crosswise the length of the oven and forming elements which can be distorted under dilatation compensation;
— radiators of which each is formed of two series of circulation tubes (18) and (20) forming a horizontal sheet, the first series of tubes (18) being placed between a supply collector (17) and an opposite independant collector (19), the second series of tubes (20) being placed between the opposite collector (19) and a return collector (21), supply (17) and return (21) collectors being placed at a similar extremity of the same sheet;
— means of adjustment (23—24—25) sensitive to the output temperature of certain or all radiators and controlling the fluid flow in the said radiators.

2. Tunnel-oven according to claim 1, characterized by the fact that the collars (9) supporting the return pipe (7) are placed on the low part of one of the two lateral parts of the tunnel, whereas the collars (9) supporting the return pipe (8) are placed on the high part of the opposite lateral side.

3. Tunnel-oven according to claim 1, characterized by the fact that the tunnel (1) includes tubular radiators (3) each maintained by their four corners by means of a first support on which the corresponding corner is immobilized, of a second support placed on the opposite side of the tunnel, enabling the second corner to be displaced crosswise and two other supports on which the two other corners are placed with possibility of movement.

4. Tunnel-oven according to claim 3, characterized by the fact that the supply and return bypasses (30 to 37) of the radiators (3) are placed in the vertical section of the first and second supports of each radiator, and have a horizontal length which is at least equal to the width of the tunnel.

5. Tunnel-oven, according to claim 1, characterized by the fact that the adjustment devices include a motorized valve (23) controlled by a probe for taking temperature (24) by means of a thermostat, the valve and the probe being placed on the return pipes (22) of the radiators.

FIG.1

FIG.2

0 076 820

FIG. 3

# FIG. 4